# EUROPEAN PATENT APPLICATION

(11) **EP 3 623 206 A2**
(43) Date of publication of application: **18.03.2020**
(21) Application number: 19196656.3
(22) Date of filing: 11.09.2019
(51) Int. Cl.: B60L 53/20

(54) **TRAIN SET AND CARS FOR TRAIN SET OPERABLE ON ROUTES HAVING ELECTRIFIED AND NON-ELECTRIFIED SECTIONS**

(30) Priority: 14.09.2018 GB 201814964
(71) Applicant: Hitachi, Ltd., Chiyoda-ku, Tokyo 100-8280 (JP)
(72) Inventor: DAUTEL, Christopher, London, Greater London EC4M 7AW (GB); FRIGERIO, Nicola, London, Greater London EC4M 7AW (GB); SONO, Makoto, Chiyoda-ku, Tokyo 1008280 (JP)
(74) Representative: Mewburn Ellis LLP

(57) **Abstract**

A lead car is provided, the lead car being positionable at the first or last position of a train set operable on a route having an electrified section and a non-electrified section. The lead car has a pantograph located on a roof of the lead car. The lead car further has a generation unit located beneath a floor of a passenger saloon of the lead car, the generation unit comprising an engine and an electricity generator driven by the engine. The lead car further has traction motors to drive the lead car, the traction motors being selectably drivable by electrical power collected by the pantograph or by electrical power generated by the generation unit. The pantograph is relatively close to an end of the lead car which forms an end of the train set, while the generation unit is relatively distant from said end of the lead car. The floor changes height between the pantograph and the generation unit such that a first portion of the floor extending beneath the pantograph is lower than a second portion of the floor extending above the generation unit.

## Description

### Field of the Present Disclosure

The present disclosure relates to a train set and cars for a train set operable on routes having electrified and non-electrified sections.

### Background

Conventionally, a railway route has two types of sections: electrified sections and non-electrified sections. An electrified section is a section having electrical power supply equipment for trains such as overhead lines and third rails, and a non-electrified section is a section where there is no such equipment and electric power for the train is obtained via an on-board power generation unit (comprising an engine, such as a diesel engine or other internal combustion engine, and a generator driven by the engine) or the train is driven directly by an engine.

Increasingly, passenger trains are required to run through both electrified sections and non-electrified sections. A train set for this type of passenger train may include one or more engine-loaded passenger cars each equipped with, for example, a generation unit and traction motors. In electrified sections, driving force is obtained by driving the traction motors of each engine-loaded car by using electric power collected, for example, from overhead lines; and in non-electrified sections, driving force is obtained by driving the traction motors of each engine-loaded train car using electric power generated by the generation unit. The train set may have lead cars at first and last positions having roof-mounted pantographs to collect the electric power from the overhead lines.

Such train sets are typically configured for running at high power and high speeds in electric mode and low power and low speeds in diesel mode.

### Summary

There are scenarios where the power requirements for electrified and non-electrified sections are reversed, e.g. the train is required to run in diesel mode on a high speed line for most of a journey, and only a small section of track is electrified and the speed in this section is limited. In order to create a train set with more diesel power than electric power it may be desirable to install a pantograph, a generation unit and traction motors in the same car. However, this can be problematic to achieve, as the pantograph is installed on the roof and typically needs to be retractable into a well formed in the roof, and the relatively bulky generation unit is under the floor, while at the same time enough space is needed for a passenger saloon between the floor and roof.

Accordingly, in a first aspect, the present disclosure provides a lead car positionable at the first or last position of a train set operable on a route having an electrified section and a non-electrified section, the lead car having:
a pantograph located on a roof of the lead car;
a generation unit located beneath a floor of a passenger saloon of the lead car, the generation unit comprising an engine and an electricity generator driven by the engine; and
traction motors to drive the lead car, the traction motors being selectably drivable by electrical power collected by the pantograph or by electrical power generated by the generation unit;
wherein the pantograph is relatively close to an end of the lead car which forms an end of the train set, while the generation unit is relatively distant from said end of the lead car; and
wherein the floor changes height between the pantograph and the generation unit such that a first portion of the floor extending beneath the pantograph is lower than a second portion of the floor extending above the generation unit.

Advantageously, by allowing the floor of the lead car to change height in this way, it can be provided with a generation unit and traction motors, as well as a pantograph, thus increasing the power available to drive the train set on non-electrified sections. However, it does this without having to sacrifice the passenger-carrying capacity of the car.

The following optional features are applicable singly or in any combination with the lead car of the first aspect.

Typically, the engine of the generation unit is an internal-combustion engine, such as a diesel engine.

Typically, the lead car further has a traction converter comprising an AC/DC converter and a DC/AC inverter, the AC/DC converter selectably converting the electrical power collected by the pantograph to DC power or the electrical power generated by the generation unit to DC power, and the DC/AC inverter inverting the DC power to AC power for supply to the traction motors.

Between said first and second portions, a sloped portion of the floor may gradually change the height of the floor between said first and second portions. For example, the sloped portion may have a gradient of not more than 27 per mille (i.e. 2.7%). In this way, the change in floor height does not need to inconvenience passengers.

The first portion may be at least 5 cm lower than said second portion. This helps to provide enough head space to accommodate the pantograph, and underfloor space to accommodate the generation unit.

The first portion may be no more than 15 cm lower than said second portion. This allows both the first and second portions to be presented at an acceptable height relative to a platform surface when the train set is stopped at a station.

The lead car may further have one or more passenger doors into the passenger saloon at the first portion and one or more passenger doors into the passenger saloon at the second portion.

The lead car may further have a roof well into which the pantograph is retracted when not in use, the roof well having a front end relatively close to said end of the lead car, and a rear end relatively distant from said end of the lead car, the first portion extending beneath the pantograph at least as far as the rear end.

The lead car may have a ceiling to the passenger saloon which changes height along the car such that a first portion of the ceiling extending above the first portion of the floor is lower than a second portion of the ceiling extending above the second portion of the floor.

The lead car may further have bogies at opposite ends thereof, the pantograph being located over one of the bogies such that a contact head of the pantograph for making electrical contact with an overhead power line is centrally positioned over the bogie when the pantograph is raised from the roof of the lead car.

Conveniently, the pantograph may be a half pantograph rather than a diamond-shaped pantograph. Typically the pantograph is double armed. The two arms of s double armed pantograph may form a V-shape that points away from the end of the lead car which forms an end of the train set.

In a second aspect, the present disclosure provides a transformer-carrying intermediate car positionable at an intermediate position of a train set operable on a route have an electrified section and a non-electrified section, the train set having respective pantographs at first and last positions of the train set to either side of the intermediate position, and other cars of the trainset having respective generation units, each comprising an engine and an electricity generator driven by the engine, and traction motors to drive those cars, the transformer-carrying intermediate car having:
a power cable extending the length of the car for receiving at both ends of the intermediate car AC electrical power collected by the pantographs and transmitted along the trainset to the intermediate car;
a transformer located beneath a floor of a passenger saloon of the intermediate car, the transformer having a primary side which receives the electrical power from the power cable and plural secondary sides which generate stepped-down AC electrical power; and
plural power lines extending from the secondary sides to one or other of the ends of the intermediate car to respectively supply the stepped-down AC electrical power to the other cars of the trainset, wherein the traction motors of each other car are selectably drivable by electrical power collected by one of the pantographs and stepped-down by the transformer or by electrical power generated by their generation unit.

Advantageously, the transformer-carrying intermediate car can provide stepped-down AC electrical power to all the other cars of the train set. It thus avoids a need for further transformers to be installed in the train set, freeing up space in the other cars instead for respective generation units, so that the power available to drive the train set on non-electrified sections can be increased.

The following optional features are applicable singly or in any combination with the transformer-carrying intermediate car of the second aspect.

Each other car of the train set may further have a respective traction converter comprising an AC/DC converter and a DC/AC inverter, the AC/DC converter selectably converting the electrical power collected by one of the pantographs and stepped-down by the transformer to DC power or the electrical power generated by its generation unit to DC power, and the DC/AC inverter inverting the DC power to AC power for supply to its traction motors. In this case, the transformer-carrying intermediate car may further have one or more auxiliary power supply units located beneath the floor of its passenger saloon, the or each auxiliary power supply unit receiving DC power from one or more of the traction converters, and inverting the DC power to AC power for powering train set auxiliary equipment (such as e.g. lighting equipment, air-conditioning equipment, on-board signalling equipment, control equipment etc.). For example, the transformer-carrying intermediate car may have two such auxiliary power supply units, one providing AC power for powering train set auxiliary equipment to the cars to one side of the intermediate car, and the other providing AC power for powering train set auxiliary equipment to the cars to the other side of the intermediate car.

In a third aspect, the present disclosure provides a train set operable on a route having an electrified section and a non-electrified section, the train set having a lead car according to the first aspect positioned at the first position, and a lead car according to the first aspect positioned at the last position.

The following optional features are applicable singly or in any combination with the train set of the third aspect.

The train set may further have one or more intermediate cars between the lead cars. In particular, the intermediate cars may have floors of respective passenger saloons at a height which is the same as the height of the second portions of the floors of the lead cars. One of the intermediate cars may be the transformer-carrying intermediate car of the second aspect. In particular, the train set may have one or more further intermediate cars to each side of the transformer-carrying intermediate car, the further intermediate cars having respective generation units and traction motors to drive those cars, the traction motors of each other car being selectably drivable by electrical power collected by one of the pantographs and stepped-down by the transformer or by electrical power generated by their generation unit. Each other car of the train set may further have a traction converter comprising an AC/DC converter and a DC/AC inverter, the AC/DC converter selectably converting the electrical power collected by one of the pantographs and stepped-down by the transformer to DC power or the electrical power generated by its generation unit to DC power, and the DC/AC inverter inverting the DC power to AC power for supply to its traction motors.

The train set may have one further intermediate car to each side of the transformer-carrying intermediate car, whereby the train set has five cars in total (i.e. two lead cars, one transformer-carrying intermediate car, and two further intermediate cars).

### Brief Description of the Drawings

Embodiments of the present disclosure will now be described by way of example with reference to the accompanying drawings in which:
Figure 1 shows schematically an example of a five-car passenger train set;
Figure 2 shows schematically connections between main electric components of the train set of Figure 1;
Figure 3 shows two of the train sets of Figure 1 joined together for high speed track operation; and
Figure 4 shows a closer view of the lead car of the train set of Figure 1.

### Detailed Description and Further Optional Features

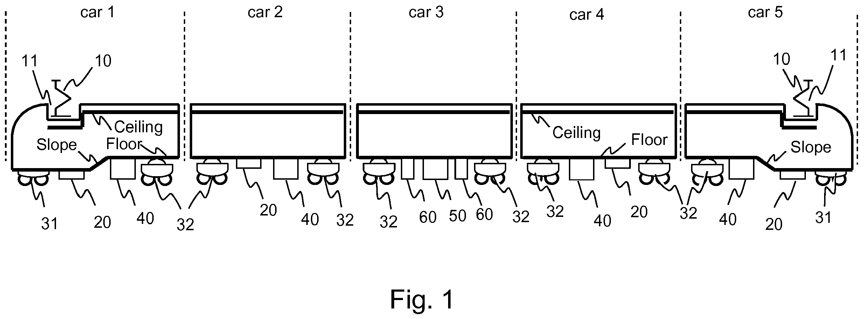

Figure 1 shows schematically an example of a five-car passenger train set, formed by two lead cars 1 and 5 at the first and last positions of the train set, and three intermediate cars 2-4. Each lead car 1 and 5 each has a pantograph 10 in a well 11 formed on its roof for collecting electric power from an overhead line, two bogies (leading bogie 31 and another bogie 32), and a drive system comprising a traction convertor 20 and a generation unit 40 under the floor of its passenger saloon. Central intermediate car 3 has two bogies 32, and a transformer 50 and two auxiliary power supplies (APSs) 60 under the floor of its passenger saloon. Each of the other intermediate cars 2 and 4 has two bogies 32, and a drive system comprising a traction convertor 20 and a generation unit 40 under the floor of its passenger saloon.

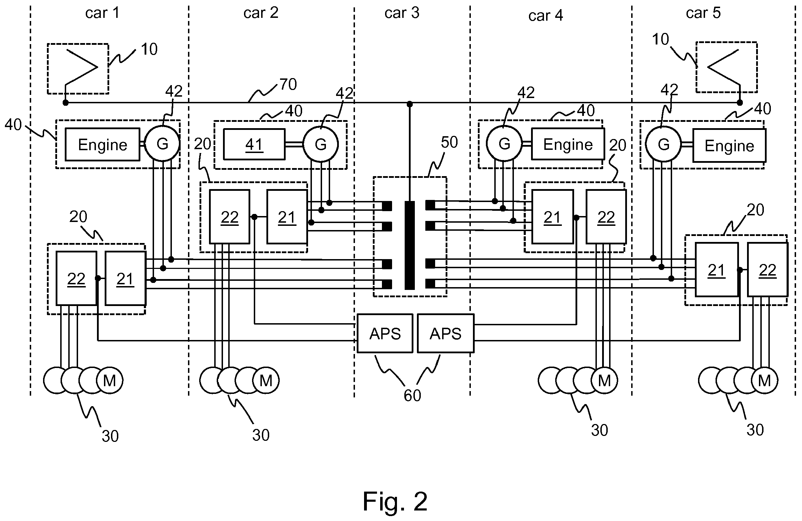

Figure 2 shows schematically connections between main electric components of the train set. The pantographs 10 of cars 1 and 5 are connected to each other by a power cable 70 which extends the length of the train set. The transformer 50 of car 3 has a primary winding and plural secondary windings, the primary winding of being connected to the two pantographs 10 via the power cable 70. The transformer 50 steps down the high voltage AC power collected the pantographs 10 to a lower voltage AC power via the secondary windings. Power lines extend from the secondary windings to the ends of car 3 to transfer the stepped-down AC power across to the other cars 1, 2, 4 and 5

Each traction convertor 20 of cars 1, 2, 4 and 5 comprises an AC/DC convertor 21 and DC/AC invertor 22. Each AC/DC convertor 21 AC has four voltage terminals which are connected by the power lines to two respective secondary windings of the transformer 50. DC voltage terminals of each AC/DC convertor 21 are connected to DC terminals of the corresponding DC/AC invertor 22. Three phase AC terminals of each DC/AC invertor 22 are then connected with the traction motors 30 of each car.

Each AC/DC convertor 21 has a switch arrangement which allows the AC/DC convertor 21 to be selectively connected to the respective secondary windings of the transformer 50 or to its generator 42.

Each generation unit 40 has an engine 41 and an electricity generator 42 driven by the engine. The engine 41 is mechanically connected with the generator 42, and the generator 42 provides three phase AC electric power to the AC/DC convertor 21 derived from rotational energy from the engine 41. The three phase AC output terminals of the generator 42 are connected to three of the AC voltage terminals of the AC/DC convertor 21.

One of the APSs 60 of car 3 has DC terminals which are connected to the DC power rails which join the AC/DC convertor 21 and DC/AC invertor 22 of the traction convertors 20 of cars 1 and 2, and the other APS 60 has DC terminals which are connected to the DC power rails which join the AC/DC convertor 21 and DC/AC invertor 22 of the traction convertors 20 of cars 4 and 5. In this way the APSs receive DC power from the AC/DC convertors 21 and provide AC power with fixed voltage and fixed frequency to auxiliary equipment such as lighting equipment, air conditioning equipment, on-board signalling equipment, control equipment etc. Each APS 60 has a switch to select which traction convertor 20 to connect to and draw power from.

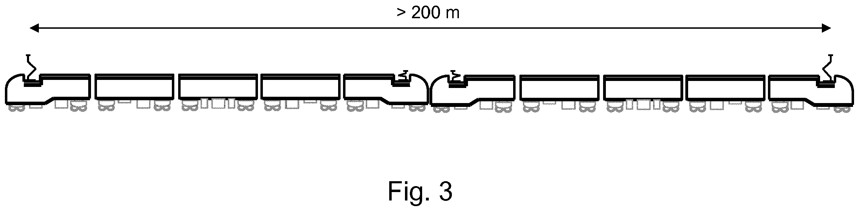

Returning to consideration of Figure 1, the installation of generation units 40 in lead cars 1 and 5 provides the train set with extra power needed to meet the journey time requirements. However, the pantographs 10 are also located in the leading cars 1 and 5 in order to maintain a minimum pantograph spacing. In particular, Figure 3 shows two of the train sets of Figure 1 joined together for high speed track operation. A front end pantograph of one of the train sets is extended to the overhead line, and a rear end pantograph of the other train set is similarly extended. The other pantographs are retracted. Under high speed operation conditions the physical wave disturbance caused by the passage of the front end extended pantograph can cause short term disconnection problems for the rear end extended pantograph (which must apply a given upward force to the overhead line in order to maintain contact). However, these problems can be reduced by spacing the pantographs as far apart as possible (e.g. by 200 meter or more), hence the desirability of locating the pantographs in the lead cars and as close to the ends of the lead cars which form the ends of the train set.

The presence of both a generation unit 40 and pantograph in each of the lead cars 1 and 5 intrudes on the space available for the passenger saloon of the car. However, this problem is addressed by providing the floor of each lead car with two floor levels. Thus a first portion of the floor beneath the pantograph 10, and typically extending at least to the end of the well 11 furthest from the end of the car which forms an end of the train set, is lower than a second portion of the floor further from that end of the car and beneath which the generation unit 40 is located. Conveniently a sloped portion of the floor can connect these higher and lower floor portions. The difference in the height levels of the first and second floor portions can be at least 5 cm and/or no more than 15 cm. The lower limit can provide enough head space to accommodate the pantograph, and underfloor space to accommodate the generation unit, and the upper limit can allow both portions to be presented at an acceptable height relative to a platform surface when the train set is stopped at a station. For example, the difference in the height levels can be about 10.5 cm.

Mirroring the split level floor, the ceiling of the passenger saloon of each of the lead cars 1 and 5 can have two levels, i.e. with a lower first ceiling portion above the lower first floor portion, and a higher second ceiling portion above the higher second floor portion. These ceiling portions can be joined by a stepped or a sloped portion.

In order to compensate for the two floor heights in the lead cars 1 and 5, the bogies 31, 32 can be equipped with adjustment shims positioned below the primary suspension. This ensures the bogie axles will all be at the same level independent of floor height.

In cars 2-4, conveniently the floor levels of the passenger saloons can be at the same higher level as that of the second floor portions above the generation units 40 of the lead cars 1 and 5. This enables the train set to be formed with no further changes in floor height, and provides enough space for the underfloor equipment carried by these cars. As the cars 2-4 do not have pantographs 10, they have no need for lower floor and ceiling portions.

Thus the intermediate cars 2 and 4 each have two bogies 32, a traction convertor 20, and a generation unit 40 accommodated beneath their floors, and the central intermediate car 3 has two bogies 32, a transformer 50, and APSs 60 accommodated beneath its floor.

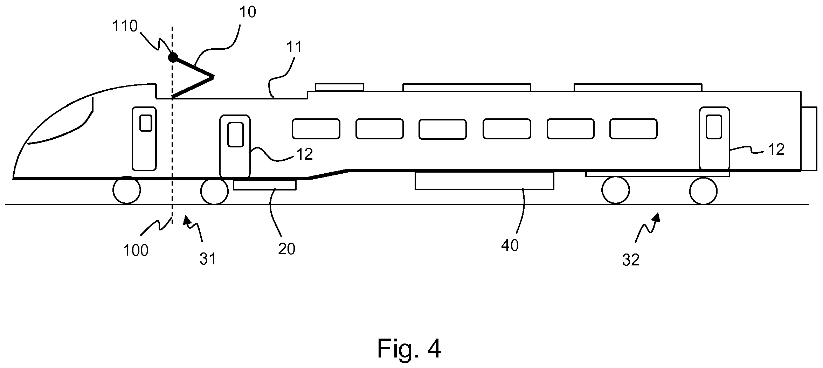

Figure 4 shows a closer view of the lead car 1. The front shape of the car has a streamlined shape to its front end to reduce air resistance and noise, which can be significant considerations, particularly for faster running train. The streamlining, can require that the pantograph 10 and well 11 are moved back from the front end. Nonetheless, it is preferable for the contact point 110 where the head of the pantograph contacts the overhead line to be on the centre line 100 of the leading bogie 31. Because the car body is supported by the bogie and rotates around a connection pin at the centre of the bogie on curved track sections, having the contact point 110 of the pantograph head above the centre of the bogie 31 helps to keep the overhead line located centrally on the head. To this end, the pantograph, which is typically a half pantograph rather than a diamond-shaped type, can be orientated to place the contact point 110 on or near the centre line 100. Especially, it is preferable that, when the pantograph has two arms, the V-shape formed by these arms points away from the front end of the lead car, this arrangement making it easier to place the contact point 110 on or near the centre line 100.

Figure 4 also shows passenger doors 12 into the passenger saloon. These can be located at the lower first floor portion and the higher second floor portion, as previously mentioned the height difference between the two floor portions being such as to allow platform access to the passenger saloon at both floor portions.

The example of Figure 1 shows a passenger train set with five cars for travel in both directions, and therefore having two leading cars 1 and 5 are located at the first and last positions of the train set. However, variants are possible, such as a trainset having only one lead car with a split level floor, or a trainset with different numbers of cars.

In conclusion, the cars and trainset described above, can provide an increased amount of underfloor space for mounting generation units and other drive and electrical system components, while allowing pantographs to be located at preferred positions close to ends of the train set, and without sacrificing the passenger-carrying capacity.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Moreover, in determining extent of protection, due account shall be taken of any element which is equivalent to an element specified in the claims. Various changes to the described embodiments may be made without departing from the spirit and scope of the invention.

## Claims

1. A lead car positionable at the first or last position of a train set operable on a route having an electrified section and a non-electrified section, the lead car having:
a pantograph located on a roof of the lead car;
a generation unit located beneath a floor of a passenger saloon of the lead car, the generation unit comprising an engine and an electricity generator driven by the engine; and
traction motors to drive the lead car, the traction motors being selectably drivable by electrical power collected by the pantograph or by electrical power generated by the generation unit;
wherein the pantograph is relatively close to an end of the lead car which forms an end of the train set, while the generation unit is relatively distant from said end of the lead car; and
wherein the floor changes height between the pantograph and the generation unit such that a first portion of the floor extending beneath the pantograph is lower than a second portion of the floor extending above the generation unit.

2. A lead car according to claim 1, wherein between said first and second portions, a sloped portion of the floor gradually changes the height of the floor between said first and second portions.

3. A lead car according to claim 1 or 2, wherein said first portion is at least 5 cm lower than said second portion.

4. A lead car according to any one of the previous claims, wherein said first portion is no more than 15 cm lower than said second portion.

5. A lead car according to any one of the previous claims, further having one or more passenger doors into the passenger saloon at said first portion and one or more passenger doors into the passenger saloon at said second portion.

6. A lead car according to any one of the previous claims, further having a roof well into which the pantograph is retracted when not in use, the roof well having a front end relatively close to said end of the lead car, and a rear end relatively distant from said end of the lead car, said first portion extending beneath the pantograph at least as far as said rear end.

7. A lead car according to any one of the previous claims further having bogies at opposite ends thereof, the pantograph being located over one of the bogies such that a contact head of the pantograph for making electrical contact with an overhead power line is centrally positioned over the bogie when the pantograph is raised from the roof of the lead car.

8. A lead car according to any one of the previous claims wherein the pantograph is a double armed, half pantograph arranged such that a V-shape formed by its double arms points away from the end of the lead car which forms an end of the train set.

9. A transformer-carrying intermediate car positionable at an intermediate position of a train set operable on a route have an electrified section and a non-electrified section, the train set having respective pantographs at first and last positions of the train set to either side of the intermediate position, and other cars of the trainset having respective generation units, each comprising an engine and an electricity generator driven by the engine, and traction motors to drive those cars, the transformer-carrying intermediate car having:
a power cable extending the length of the car for receiving at both ends of the intermediate car AC electrical power collected by the pantographs and transmitted along the trainset to the intermediate car;
a transformer located beneath a floor of a passenger saloon of the intermediate car, the transformer having a primary side which receives the electrical power from the power cable and plural secondary sides which generate stepped-down AC electrical power; and
plural power lines extending from the secondary sides to one or other of the ends of the intermediate car to respectively supply the stepped-down AC electrical power to the other cars of the trainset, wherein the traction motors of each other car are selectably drivable by electrical power collected by one of the pantographs and stepped-down by the transformer or by electrical power generated by their generation unit.

10. A transformer-carrying intermediate car according to claim 9, wherein each other car of the train set further has a traction converter comprising an AC/DC converter and a DC/AC inverter, the AC/DC converter selectably converting the electrical power collected by one of the pantographs and stepped-down by the transformer to DC power or the electrical power generated by its generation unit to DC power, and the DC/AC inverter inverting the DC power to AC power for supply to its traction motors, and wherein the transformer-carrying intermediate car further has one or more auxiliary power supply units located beneath the floor of its passenger saloon, the or each auxiliary power supply unit receiving DC power from one or more of the traction converters, and inverting the DC power to AC power for powering train set auxiliary equipment.

11. A transformer-carrying intermediate car according to claim 10, which has two such auxiliary power supply units, one providing AC power for powering train set auxiliary equipment to the cars to one side of the intermediate car, and the other providing AC power for powering train set auxiliary equipment to the cars to the other side of the intermediate car.

12. A train set operable on a route having an electrified section and a non-electrified section, the train set having a lead car according to any one of claims 1 to 8 positioned at the first position, and a lead car according to any one of claims 1 to 8 positioned at the last position.

13. A train set according to claim 12, further having one or more intermediate cars between the lead cars, and optionally wherein the intermediate cars have floors of respective passenger saloons at a height which is the same as the height of the second portions of the floors of the lead cars.

14. A train set according to claim 13, wherein one of the intermediate cars is the transformer-carrying intermediate car of any one of claims 9 to 11.

15. A train set according to claim 14 which has one or more further intermediate cars to each side of the transformer-carrying intermediate car, the further intermediate cars having respective generation units and traction motors to drive those cars, the traction motors of each other car being selectably drivable by electrical power collected by one of the pantographs and stepped-down by the transformer or by electrical power generated by their generation unit.
